# EUROPEAN PATENT SPECIFICATION

(11) **EP 3 854 285 B1**
(45) Date of publication and mention of the grant of the patent: **15.04.2026**
(21) Application number: 19872692.9
(22) Date of filing: 17.10.2019
(51) Int. Cl.: A47L 9/04, F16C 33/12, F16C 17/24, F16C 33/10, F16C 17/04, F16H 57/021, F16H 55/17

(54) **GEARBOX AND INTELLIGENT CLEANING APPARATUS**
GETRIEBE UND INTELLIGENTE REINIGUNGSVORRICHTUNG
BOÎTE DE VITESSES ET APPAREIL DE NETTOYAGE INTELLIGENT

(30) Priority: 18.10.2018 CN 201821694664 U
(43) Date of publication of application: 28.07.2021
(73) Proprietor: Beijing Roborock Technology Co., Ltd., Haidian District, Beijing 100085 (CN)
(72) Inventor: YANG, Fan, Beijing 100085 (CN)
(74) Representative: Lorenz Seidler Gossel Part. mbB
(86) International application number: PCT/CN2019/111765
(87) International publication number: WO 2020/078441

(56) References cited:
- EP-B1- 2 761 195
- CN-A- 101 603 569
- CN-A- 101 603 569
- CN-A- 101 716 995
- CN-A- 103 654 640
- CN-A- 103 654 640
- CN-A- 105 982 625
- CN-A- 107 638 138
- CN-U- 209 153 451
- DE-A1- 3 326 316
- JP-A- 2005 131 111
- US-B2- 8 881 339

## Description

### TECHNICAL FIELD

The present invention relates to the field of cleaning tools, and more specifically, to a gearbox and an intelligent cleaning apparatus.

### BACKGROUND

Generally, most intelligent cleaning apparatuses are equipped with gearboxes to transmit driving power (after gear shift) from a driving device to cleaning apparatuses, so that the cleaning apparatuses can perform a cleaning task at an appropriate rotation speed. In some gearboxes, porous bearings are used to support rotating parts such as output gears to reduce wear. However, the rotation speed of the rotating parts is relatively high, and some can reach 22.5 rps (Revolutions Per Second). High-speed rotation causes greater noise and higher temperature rise at the contact surface between the rotating parts and the porous bearings, which not only affects the user experience, but also reduces the service life of the parts in the gearbox.

EP2761195B1 relates to a hydrodynamic axial bearing, whose friction-loss coefficients may be reduced by a factor of at least 5 with respect to conventional axial bearings of graphite or sintered ceramics with flat slip rings or slip rings provided with lubricating slots. Also, as shown in Figs. 4a and 4b of EP2761195B1, the projection 6 with the supporting surfaces (contact surfaces) 8 on the slip ring is shown.

US8881339B2 relates to a cleaning head roller. As shown in Fig. 18 of US8881339B2, the roller drive gear 1800 is shown in the gearbox housing 1810 along with a roller drive shaft 1820 and two bushings 1822, 1824, and a shroud 1830 is shown to extend from the within the roller tube 350 to contact the gearbox housing 1810 and the bearing 1824 and can prevent hair and debris from reaching the gear 1800.

DE3326316A1 relates to a cylindrical plain bearing. As shown in Fig. 1 of DE3326316A1, the cylindrical plain bearing 1 is provided with an inner running surface 2 into which the indentations for receiving lubricant are introduced, and by means of an embossing tool, 0.2 to 1.0 mm deep indentations can be pressed into the inner running surface.

### SUMMARY

The above-mentioned problems are solved by the invention as claimed in claim 1. The latter defines an intelligent cleaning apparatus for which protection is sought. The dependent claims concern particular embodiments of the invention as claimed in claim 1.

### BRIEF DESCRIPTION OF DRAWINGS

In the drawings:
FIG. 1 is a schematic view of an intelligent cleaning apparatus;
FIG. 2 is a schematic view of another perspective of the intelligent cleaning apparatus shown in FIG. 1;
FIG. 3 is an exploded view of a gearbox according to an embodiment not falling within the wording of claim 1;
FIG. 4 and FIG. 5 are stereoscopic views of an output gear of the gearbox shown in FIG. 3; and
FIG. 6 is a schematic diagram of arranging a recess on a support surface or a contact surface, as mentioned in the characterizing portion of claim 1.

### DESCRIPTION OF EMBODIMENTS

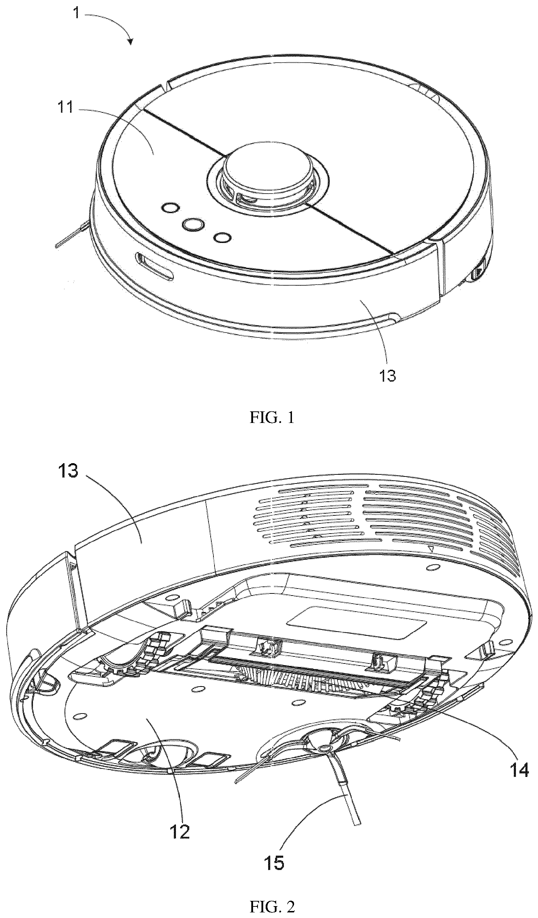

The intelligent cleaning apparatus mainly includes a cleaning system, a perception system, a control system, a driving system, an energy system, a man-machine interaction system, etc. Various systems cooperate with each other to make the intelligent cleaning apparatus autonomously move and implement a cleaning task. FIG. 1 and FIG. 2 are example stereoscopic views of an intelligent cleaning apparatus according to an embodiment of the invention as claimed. The intelligent cleaning apparatus mainly includes a device body 1. The elements that constitute the foregoing systems device are mounted in the device body 1.

As shown in FIG. 1 and FIG. 2, the device body 1 has an approximate circular shape (both the front and the back are circular), and includes an upper cover 11, a chassis 12, and a middle frame 13 arranged between the upper cover 11 and the chassis 12. The middle frame 13 serves as a basic frame for arranging various functional elements. The upper cover 11 and the chassis 12 respectively cover an upper surface and a lower surface of the middle frame 13 to protect internal parts and improve appearance of the intelligent cleaning apparatus. Certainly, in other embodiments, the device body may have other shapes, including but not limited to an approximate D-shape, that is, the front is straight and the back is circular.

The driving system is used for providing driving force for the smart cleaning system to autonomously move, and for the cleaning system to implement the cleaning function. The perception system is used for the intelligent cleaning apparatus to perceive an external environment such as topography, and provides various position information and motion state information of the machine for the control system. The control system comprehensively determines a current working status (such as crossing a threshold, crossing the edge of a carpet, reaching a cliff, being stuck, full dust box, or being picked up) of the intelligent cleaning apparatus based on the foregoing information, and provides next actions based on different situations. Furthermore, the control system may plan an efficient and reasonable cleaning route and cleaning mode based on information about an instant map, thereby improving the working efficiency of the intelligent cleaning apparatus. The man-machine interaction system is used for a user to select functions and/or to display the current status of the intelligent cleaning apparatus or function options. The energy system is used for supplying power to the functional elements of the systems.

The cleaning system is an important system of the intelligent cleaning apparatus, and is used for implementing a cleaning task. The cleaning system may include a dry cleaning assembly and a wet cleaning assembly. The dry cleaning assembly is mainly configured to remove specific particulate pollutants from a surface. The wet cleaning assembly is mainly configured to mop a surface (such as a floor surface).

Specifically, the dry cleaning assembly may mainly include a cleaning brush, a waste container, and a vacuum. As shown in FIG. 2, the cleaning brush may include a primary brush 14 and a side brush 15. The primary brush 14 has a rotation shaft substantially parallel to a plane on which the chassis 12 is located and protrudes outward from the chassis 12. As a result, the primary brush 14 interferes with the floor surface under the chassis 12. The side brush 15 is arranged at the edge of the bottom of the device body 1, and its rotation shaft is at a certain angle with respect to the floor surface, so that debris can be moved into the cleaning region of the primary brush 14 while the side brush 15 rotates. The vacuum is connected to the waste container, and the vacuum is configured to generate suction force. When the primary brush 14 rotates with the rotation shaft, the debris on the floor surface is agitated by the primary brush 14 and taken to a suction door between the primary brush 14 and the waste container, and then sucked into the waste container by the suction force generated by the vacuum. The wet cleaning assembly mainly includes a liquid reservoir and a cleaning cloth. The liquid reservoir may be configured to contain cleaning liquid, and the cleaning cloth is detachably disposed on the liquid reservoir. After the dry cleaning assembly completes cleaning, the liquid in the liquid reservoir flows to the cleaning cloth, and the cleaning cloth mops the floor surface cleaned by the dry cleaning assembly.

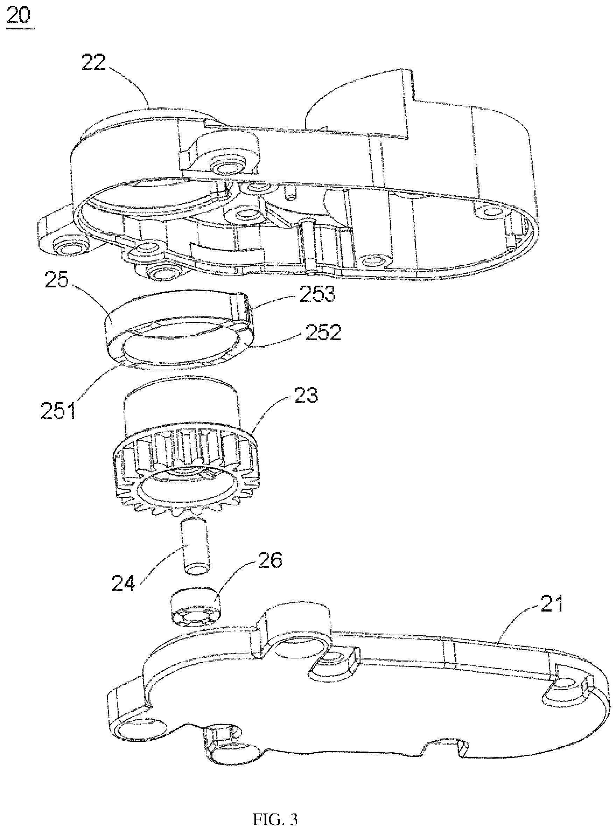

The gearbox 20 shown in FIG. 3 is disposed in the device body 1 of the intelligent cleaning apparatus. The gearbox 20 may connect to a driving motor of the driving system and the cleaning brush of the dry cleaning assembly of the cleaning system, and is configured to transmit the driving force of the driving motor to the cleaning brush, to make the cleaning brush rotates around the rotation shaft.

As shown in FIG. 3, the gearbox 20 includes a first housing 21 and a second housing 22. The first housing 21 and the second housing 22 form an accommodation space for accommodating components of the gearbox 20 and serve as a basic frame for installing these components. The transmission function of the gearbox 20 is implemented by an input gear and an output gear 23. When being installed in the device body 1, the input gear is connected to the driving motor of the driving system, and the output gear 23 is engaged to, the rotation shaft of the primary brush 14 or side brush 15. The transmission between the input gear and the output gear is implemented by the gears engage each other, so that the driving force is transmitted to the primary brush 14 or the side brush 15 at an appropriate rotation speed. For the sake of brevity, the input gear and its mating components are omitted in FIG. 3. The following describes the output gear 23.

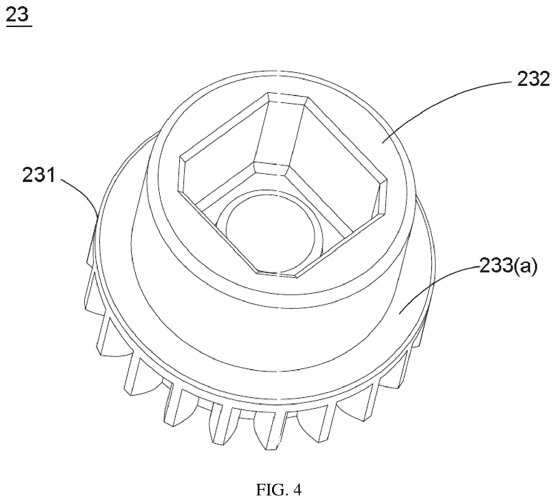

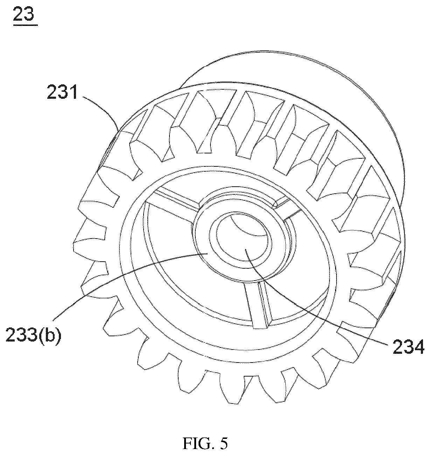

As shown in FIG. 4 and FIG. 5, the output gear 23 may include a gear body 231. The gear body 231 is substantially constructed in a cylindrical shape, and a plurality of teeth for engaging are arranged on a side surface of the gear body 231 at intervals in the circumferential direction. As can be seen in FIG. 4, one end of the gear body 231 in the axial direction is provided with an engaging part 232 protruding outward. The engaging part 232 protrudes outward from the surface of the first housing 21 or the second housing 22 to facilitate engagement with the rotation shaft of the primary brush 14. As shown in FIG. 5, the gear body 231 is recessed inward on the side opposite to the engaging part 232 in the axial direction, and a hole 234 is formed at the center. Referring back to FIG. 3, the gearbox 20 further includes a shaft 24. The shaft 24 is fixedly disposed in the gearbox 20, and the output gear 23 is sleeved on the shaft 24 through the hole 234 and can rotate around the shaft 24. The shaft 24 defines the rotation axis of the output gear 23. To prevent the shaft 24 from interfering with the engagement between the engaging part 232 and the rotating shaft of the primary brush 14, the hole 234 is closed at one end close to the engaging part 232.

The output gear 23 is supported by a porous bearing in the gearbox 20. According to an embodiment of the invention as claimed, a first porous bearing 25 and a second porous bearing 26 are respectively disposed on both sides of the output gear 23 in the axial direction. As shown in FIG. 3, the first porous bearing 25 is located at the end of the output gear 23 where the engaging part 232 is disposed. The engaging part 232 protrudes outward through the first porous bearing 25. The second porous bearing 26 is disposed at the end of the output gear 23 opposite to the engaging part 232 in the axial direction, and is accommodated in the recess of the end. Both the first porous bearing 25 and the second porous bearing 26 are disposed coaxially with the output gear 23.

The first porous bearing 25 and the second porous bearing 26 may have similarly structures, and differs from each other in the size. For this reason, only the first porous bearing 25 is described herein. It can be understood that the structural features of the first porous bearing 25 may be also applicable to the second porous bearing 26.

The first porous bearing 25 is constructed in a circular ring shape, and is provided with at least one radially outward protrusion 253 on the side surface. The first porous bearing 25 is fixed by cooperation with a groove on the first housing 21 and the protrusion 253, or a groove on the second housing 22 and the protrusion 253. The first porous bearing 25 has a support surface 251 that supports the rotation of the output gear 23. Correspondingly, as shown in FIG. 4 and FIG. 5, the output gear 23 has a contact surface 233 that contacts the support surface 251. The surface of the output gear 23 that contact the first porous bearing 25 may be referred to as a contact surface 233a, and the surface of the output gear 23 that contacts the second porous bearing may be referred to as a contact surface 233b.

In an existing gearbox, the relative rotation between the porous bearing and the output gear will cause a loud noise and a temperature increase. To solve this problem, as shown in FIG. 3, the support surface 251 of the first porous bearing 25 is provided with a recess 252. Thus, in the case that the first porous bearing 25 supports the output gear 23, the contact surface 233a do not contact the recess 252 of the first porous bearing 25. In this way, the contact area between the support surface 251 and the contact surface 233a reduces, that is, the area in which friction is generated reduces, thereby effectively reducing the noise and temperature increase caused by friction.

A plurality of recesses 252 may be provided to further reduce the contact area. However, it should be noted that the plurality of recesses 252 should be evenly distributed around the rotation axis to ensure a stable support and avoid deflection during the rotation. In addition, the output gear 23 may alternatively be made of plastic material, thereby further reducing the noise and temperature increase caused by friction.

In the illustrated embodiment, the recess 252 is provided on the support surface 251 of the first porous bearing 25. It can be understood that, in other embodiments, the recess 252 may be provided on the contact surface 233a of the output gear 23, or the recess 252 may be provided on both the contact surface 233a and the support surface 251.

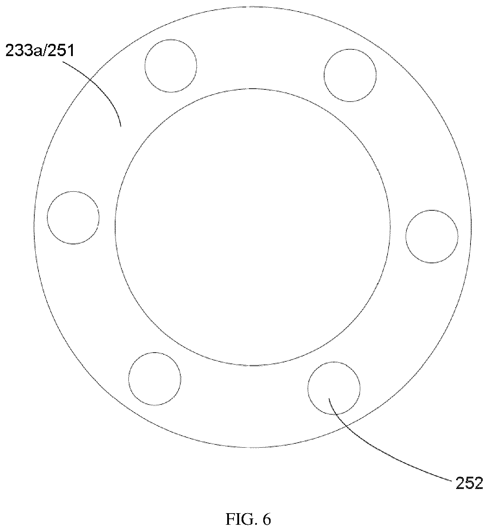

It should be noted that, in the illustrated embodiment, four recesses 252 divide the support surface 251 of the first porous bearing 25 into four discontinuous portions. Therefore, if recesses are also provided on the contact surface 233a, the area of the recesses on the contact surface 233a corresponding to the support surface 251 (that is, the recesses that can be aligned with the support surface 251 during rotation) is smaller than the area of each support surface 251, or projections of each support surface 251 and the recess on a plane perpendicular to the rotation axis do not overlap, so as to prevent the support surface 251 from falling into the recess when the support surface 251 rotates to a position aligned with the recess, which causes unstable support. Alternatively, the recesses 252 on both the contact surface 233a and the support surface 251 can be provided in the form shown in FIG. 6, that is, the contact surface 233a or the support surface is still a continuous surface after being provided with the recess 252, instead of being divided into several independent portions by the recess.

In addition, it can be understood that the foregoing structure in which the output gear and the porous bearing cooperate with each other is also applicable to the input gear of the gearbox. Said application on the input gear not constitute an embodiment of the invention as claimed in claim 1.

## Claims

1. An intelligent cleaning apparatus, comprising:
a cleaning head (14, 15), and
a gearbox, wherein the gearbox comprises:
a rotatable part, configured to rotate about a rotation axis to transmit power for a cleaning head (14, 15) of the intelligent cleaning apparatus, wherein the rotatable part comprises a contact surface (233a); and
a porous bearing (25, 26), fixedly disposed in the gearbox and comprising a support surface (251), wherein the contact surface (233a) of the rotatable part and the support surface (251) of the porous bearing contact each other to support rotation of the rotatable part relative to the porous bearing (25, 26);
wherein at least one of the contact surface (233a) and the support surface (251) is provided with recesses (252), and
wherein the rotatable part is an output gear (23),wherein the porous bearing (25, 26) supports the output gear (23) at an end of the output gear (23) along the rotation axis, and
wherein the gearbox is connected respectively to a driving device and a cleaning head of the intelligent cleaning apparatus, so as to transmit a driving force from the driving device to the cleaning head,
**characterized in that**,
the recesses (252) comprise a plurality of first recesses provided on the support surface (251) and a plurality of second recesses provided on the contact surface (233a), and
the contact surface (233a) or the support surface (251) is still a continuous surface after being provided with the recesses (252).

2. The intelligent cleaning apparatus according to claim 1, wherein the recesses (252) are evenly distributed around the rotation axis.

3. The intelligent cleaning apparatus according to claim 1, wherein the output gear (23) is made of plastic material.

4. The intelligent cleaning apparatus according to any one of claims 1 to 3, further comprising a perception system and a control system, wherein
the perception system is configured to perceive an external environment of the intelligent cleaning apparatus, and provide position information and motion state information of the intelligent cleaning apparatus for the control system, and
the control system is configured to comprehensively determine a current working status of the intelligent cleaning apparatus based on the position information and the motion state information, and provide strategies about next actions of the intelligent cleaning apparatus.

5. The intelligent cleaning apparatus according to any one of claims 1 to 4, further comprising a wet cleaning assembly, wherein
the wet cleaning assembly comprises a liquid reservoir and a cleaning cloth, the liquid reservoir is configured to contain cleaning liquid, and the cleaning cloth is detachably disposed on the liquid reservoir.

6. The intelligent cleaning apparatus according to any one of claims 1 to 5, wherein the porous bearing (25, 26) comprises a first porous bearing (25) and a second porous bearing (26) respectively disposed on both sides of the output gear (23) in an axial direction.

7. The intelligent cleaning apparatus according to claim 6, wherein the first porous bearing (25) is constructed in a circular ring shape, and provided with at least one radially outward protrusion (253) on a side surface.

## Patentansprüche

1. Intelligente Reinigungsvorrichtung, umfassend:
einen Reinigungskopf (14, 15), und
ein Getriebe, wobei das Getriebe umfasst:
einen drehbaren Teil, der dazu konfiguriert ist, sich um eine Drehachse zu drehen, um Leistung für einen Reinigungskopf (14, 15) der intelligenten Reinigungsvorrichtung zu übertragen, wobei der drehbare Teil eine Kontaktfläche (233a) umfasst; und
ein poröses Lager (25, 26), fest im Getriebe angeordnet und eine Stützfläche (251) umfassend, wobei die Kontaktfläche (233a) des drehbaren Teils und die Stützfläche (251) des porösen Lagers einander berühren, um die Drehung des drehbaren Teils relativ zu dem porösen Lager (25, 26) zu stützen;
wobei mindestens eine der Kontaktfläche (233a) und der Stützfläche (251) mit Vertiefungen (252) versehen ist, und
wobei der drehbare Teil ein Abtriebszahnrad (23) ist, wobei das poröse Lager (25, 26) das Abtriebszahnrad (23) an einem Ende des Abtriebszahnrads (23) entlang der Drehachse stützt, und
wobei das Getriebe jeweils mit einer Antriebsvorrichtung und einem Reinigungskopf der intelligenten Reinigungsvorrichtung verbunden ist, um eine Antriebskraft von der Antriebsvorrichtung zu dem Reinigungskopf zu übertragen, **dadurch gekennzeichnet, dass**
die Vertiefungen (252) eine Mehrzahll erster Vertiefungen umfassen, die auf der Stützfläche (251) vorgesehen sind, und eine Mehrzahll zweiter Vertiefungen, die auf der Kontaktfläche (233a) vorgesehen sind, und
die Kontaktfläche (233a) oder die Stützfläche (251) auch nach dem Vorsehen der Vertiefungen (252) noch eine kontinuierliche Oberfläche ist.

2. Intelligente Reinigungsvorrichtung nach Anspruch 1, wobei die Vertiefungen (252) gleichmäßig um die Drehachse verteilt sind.

3. Intelligente Reinigungsvorrichtung nach Anspruch 1, wobei das Abtriebszahnrad (23) aus Kunststoffmaterial hergestellt ist.

4. Intelligente Reinigungsvorrichtung nach einem der Ansprüche 1 bis 3, ferner umfassend ein Wahrnehmungssystem und ein Steuersystem, wobei
das Wahrnehmungssystem dazu konfiguriert ist, eine externe Umgebung der intelligenten Reinigungsvorrichtung wahrzunehmen und Positionsinformationen sowie Bewegungszustandsinformationen der intelligenten Reinigungsvorrichtung für das Steuersystem bereitzustellen, und
das Steuersystem dazu konfiguriert ist, einen aktuellen Arbeitsstatus der intelligenten Reinigungsvorrichtung auf Grundlage der Positionsinformationen und der Bewegungszustandsinformationen umfassend zu bestimmen und Strategien bezüglich der nächsten Aktionen der intelligenten Reinigungsvorrichtung bereitzustellen.

5. Intelligente Reinigungsvorrichtung nach einem der Ansprüche 1 bis 4, ferner umfassend eine Nassreinigungsanordnung, wobei
die Nassreinigungsanordnung ein Flüssigkeitsreservoir und ein Reinigungstuch umfasst, wobei das Flüssigkeitsreservoir dazu konfiguriert ist, Reinigungsflüssigkeit aufzunehmen, und wobei das Reinigungstuch abnehmbar am Flüssigkeitsreservoir angeordnet ist.

6. Intelligente Reinigungsvorrichtung nach einem der Ansprüche 1 bis 5, wobei das poröse Lager (25, 26) ein erstes poröses Lager (25) und ein zweites poröses Lager (26) umfasst, die jeweils beidseitig des Abtriebszahnrads (23) in axialer Richtung angeordnet sind.

7. Intelligente Reinigungsvorrichtung nach Anspruch 6, wobei das erste poröse Lager (25) in Form eines kreisförmigen Rings ausgebildet ist und auf einer Seitenfläche mit mindestens einem radial nach außen gerichteten Vorsprung (253) versehen ist.

## Revendications

1. Appareil de nettoyage intelligent, comprenant :
une tête de nettoyage (14, 15), et
un boîtier d'engrenages, dans lequel le boîtier d'engrenages comprend :
une partie rotative, configurée pour tourner autour d'un axe de rotation afin de transmettre une puissance pour une tête de nettoyage (14, 15) de l'appareil de nettoyage intelligent, ladite partie rotative comprenant une surface de contact (233a) ; et
un palier poreux (25, 26), disposé de manière fixe dans le boîtier d'engrenages et comprenant une surface de support (251), la surface de contact (233a) de la partie rotative et la surface de support (251) du palier poreux étant en contact l'une avec l'autre afin de supporter la rotation de la partie rotative par rapport au palier poreux (25, 26) ;
dans lequel au moins l'une de la surface de contact (233a) et de la surface de support (251) est pourvue de évidements (252), et
dans lequel la partie rotative est un engrenage de sortie (23), dans lequel le palier poreux (25, 26) supporte l'engrenage de sortie (23) à une extrémité de l'engrenage de sortie (23) le long de l'axe de rotation, et
dans lequel le boîtier d'engrenages est relié respectivement à un dispositif d'entraînement et à une tête de nettoyage de l'appareil de nettoyage intelligent, de manière à transmettre une force d'entraînement du dispositif d'entraînement à la tête de nettoyage, **caractérisé en ce que**
les évidements (252) comprennent une pluralité de premiers évidements prévus sur la surface de support (251) et une pluralité de seconds évidements prévus sur la surface de contact (233a), et
la surface de contact (233a) ou la surface de support (251) est encore une surface continue après avoir été pourvue des évidements (252).

2. Appareil de nettoyage intelligent selon la revendication 1, dans lequel les évidements (252) sont répartis uniformément autour de l'axe de rotation.

3. Appareil de nettoyage intelligent selon la revendication 1, dans lequel l'engrenage de sortie (23) est réalisé en matériau plastique.

4. Appareil de nettoyage intelligent selon l'une quelconque des revendications 1 à 3, comprenant en outre un système de perception et un système de commande, dans lequel
le système de perception est configuré pour percevoir un environnement externe de l'appareil de nettoyage intelligent et fournir des informations de position ainsi que des informations d'état de mouvement de l'appareil de nettoyage intelligent au système de commande, et
le système de commande est configuré pour déterminer de manière globale un état de fonctionnement actuel de l'appareil de nettoyage intelligent sur la base des informations de position et des informations d'état de mouvement, et fournir des stratégies concernant les actions suivantes de l'appareil de nettoyage intelligent.

5. Appareil de nettoyage intelligent selon l'une quelconque des revendications 1 à 4, comprenant en outre un ensemble de nettoyage humide, dans lequel
l'ensemble de nettoyage humide comprend un réservoir de liquide et un chiffon de nettoyage, le réservoir de liquide étant configuré pour contenir un liquide de nettoyage, et le chiffon de nettoyage étant disposé de manière amovible sur le réservoir de liquide.

6. Appareil de nettoyage intelligent selon l'une quelconque des revendications 1 à 5, dans lequel le palier poreux (25, 26) comprend un premier palier poreux (25) et un second palier poreux (26) disposés respectivement de part et d'autre de l'engrenage de sortie (23) dans une direction axiale.

7. Appareil de nettoyage intelligent selon la revendication 6, dans lequel le premier palier poreux (25) est réalisé sous la forme d'un anneau circulaire, et est pourvu d'au moins une saillie (253) s'étendant radialement vers l'extérieur sur une surface latérale.
